# FASCICULE DE BREVET EUROPEEN

(11) **EP 2 735 707 B1**
(45) Date de publication et mention de la délivrance du brevet: **05.04.2017**
(21) Numéro de dépôt: 12194325.2
(22) Date de dépôt: 27.11.2012
(51) Int. Cl.: F01D 9/04, F01D 11/00

(54) **Redresseur de turbomachine axiale avec virole interne segmentée et compresseur associé**
Leitrad einer axialen Turbomaschine mit segmentiertem Innendeckband und zugehöriger Verdichter
Axial turbomachine guide nozzle with segmented inner shroud and corresponding compressor

(43) Date de publication de la demande: 28.05.2014
(73) Titulaire: Safran Aero Boosters SA, 4041 Herstal (BE)
(72) Inventeur: Grelin, Hervé, 89340 Villeblevin (FR)
(74) Mandataire: Lecomte & Partners

(56) Documents cités:
- EP-A1- 2 075 415
- EP-A1- 2 196 629
- EP-A1- 2 204 546
- US-A- 3 326 523
- US-A1- 2010 166 545
- US-B2- 6 595 747

## Description

### Domaine technique

L'invention a trait à une turbomachine axiale. Plus particulièrement, l'invention a trait à un redresseur de turbomachine axiale comprenant une virole interne segmentée. L'invention a également trait à un procédé d'assemblage d'un redresseur. L'invention traite également d'un compresseur axial.

### Technique antérieure

Afin de guider un flux annulaire, une turbomachine axiale est munie de viroles coaxiales délimitant l'intérieur et l'extérieur du flux. Dans un redresseur, les viroles internes sont essentiellement reliées aux extrémités des aubes statoriques. Elles forment des parois cylindriques présentant des ouvertures dans lesquelles sont introduites les extrémités des aubes statoriques en vue de leur fixation.

Les ouvertures sont de taille supérieure pour y faciliter l'introduction des extrémités des aubes, la différence de taille devant ensuite être colmatée.

Pour assurer une étanchéité entre les étages du compresseur, une couche de matériau abradable est déposée sur chaque surface intérieure des viroles internes. Ces couches sont destinées à affleurer des extrémités d'ailettes radiales qui sont formées sur le rotor. La section des viroles internes peut former un U de sorte à présenter une gorge annulaire interne recevant la couche de matériau abradable.

Le document EP 2 196 629 A1 divulgue un redresseur de compresseur de turbomachine axiale, conforme au préambule de la revendication 1. La virole a une section en U dont le creux reçoit une couche de matériau abradable. La virole interne est constituée de plusieurs segments de virole joints bout à bout. Leurs interfaces présentent des surfaces aptes à épouser les surfaces aérodynamiques des aubes. Ces mêmes secteurs présentent d'un côté des bossages et des encoches de l'autre. Les bossages d'un secteur peuvent s'engager dans les encoches d'un secteur voisin de sorte à se verrouiller mutuellement.

En raison de la souplesse relative du matériau abradable et de la configuration des bossages, les secteurs demeurent sensiblement mobiles les uns par rapport aux autres. Or, en fonctionnement, une telle virole est soumise à des excitations fréquentielles. En fonction de cette dernière, la virole interne peut montrer des modes vibratoires destructifs. De plus, les bossages et les encoches présentent des épaisseurs radiales importantes qui impactent l'épaisseur des secteurs. Ce besoin de matière alourdi la virole et donc influe sur sa réponse vibratoire.

Le document US 5,636,968 divulgue également un redresseur de compresseur de turbomachine axiale. Les aubes du redresseur sont montées pivotantes à une virole interne segmentée. Cette liaison pivotant est assurée par un profilé circulaire avec une série de trous oblongs ou d'encoches coopérant par engagement avec des gorges sur les pivots des aubes. Un rail composé de deux moitiés en demi-cercle assure le maintien des segments et supporte une couche de matériau abradable.

### Résumé de l'invention

### Problème technique

L'invention a pour objectif de résoudre au moins un des problèmes posés par l'état de l'art. Plus particulièrement, l'invention a pour objectif d'améliorer le comportement vibratoire d'un redresseur avec une virole interne segmentée. L'invention a également pour objectif d'améliorer la construction des redresseurs, notamment au niveau de la liaison entre les aubes et la virole interne.

### Solution technique

L'invention a pour objet un redresseur de compresseur de turbomachine axiale selon la revendication 1, ce redresseur comprenant une rangée annulaire d'aubes s'étendant radialement, une virole interne traversée par les extrémités internes des aubes, ladite virole étant constituée de segments annulaires disposés bout à bout, caractérisé en ce qu'il comprend, en outre, au moins un profilé s'étendant de manière circonférentielle le long de la surface interne de la virole et coopérant avec des moyens d'accrochage des extrémités internes des aubes en vue de leur rétention, le ou lesdits profilés s'étendant de manière continue le long d'au moins deux segments annulaires voisins, et en ce que le ou les profilés sont à distance de la surface interne de la virole, ladite surface étant recouverte d'une couche de matériau abradable noyant le ou les profilés.

Suivant un mode avantageux de l'invention, le profilé s'étend essentiellement parallèlement à la virole interne.

Suivant un mode avantageux de l'invention, la virole interne présente une gorge annulaire ouverte vers l'intérieur qui loge la couche de matériau abradable.

Suivant un mode avantageux de l'invention, la couche de matériau abradable présente une continuité de matière au niveau des jonctions entre les segments.

Suivant un mode avantageux de l'invention, la virole interne est réalisée en matériau métallique ou composite.

Suivant un mode avantageux de l'invention, le ou au moins un des profilés présente une section plate, la section étant préférentiellement pleine.

Suivant une alternative de l'invention, le ou au moins un des profilés présente une section circulaire, éventuellement le ou au moins un des profilés est un fil ou un câble.

Suivant un mode avantageux de l'invention, le profilé ou chacun des profilés s'étend sur au moins un quart, préférentiellement un tiers, plus préférentiellement une moitié, de chacun des deux segments annulaires voisins.

Suivant un mode avantageux de l'invention, le ou les profilés forment un anneau ouvert.

Suivant un mode avantageux de l'invention, les moyens d'accrochage des extrémités internes des aubes comprennent des ouvertures et/ou des crochets coopérant avec le ou les profilés.

Suivant un mode avantageux de l'invention, les moyens d'accrochage sont à distance des bords amont et aval de la virole, les moyens d'accrochage étant préférentiellement essentiellement en position centrale de la virole suivant une direction axiale.

Suivant un mode avantageux de l'invention, les portions des moyens d'accrochage coopérant avec le ou les profilés présentent des longueurs suivant une direction axiale qui sont supérieures de 100%, préférentiellement 200%, à la largeur du ou des profilés de sorte à autoriser une variation de positionnement des moyens d'accrochage suivant ladite direction.

Suivant un mode avantageux de l'invention, le ou les profilés présentent un profil annulaire correspondant au profil de la virole.

Suivant un mode avantageux de l'invention, le profil du ou des profilés entre deux aubes voisines correspond à celui de la virole.

Suivant un mode avantageux de l'invention, la virole comprend au moins quatre segments annulaires, le profilé ou un des profilés décrivant au moins un vingtième de la virole interne, préférentiellement au moins un huitième de la virole interne, plus préférentiellement un quart de la virole interne.

Suivant un mode avantageux de l'invention, le profilé est en matériau métallique, préférentiellement du titane, de l'acier ou de l'aluminium.

Suivant un mode avantageux de l'invention, les moyens d'accrochage des extrémités internes des aubes comprennent des crochets présentant une entrée orientée selon une direction axiale.

Suivant un mode avantageux de l'invention, les crochets présentent un rebord au niveau de leur entrée, apte à assurer une retenue du ou des profilés selon la direction axiale.

Suivant un mode avantageux de l'invention, les crochets peuvent être des encoches réalisées latéralement sur les extrémités internes des aubes.

Suivant un mode avantageux de l'invention, le redresseur comprend des joints d'étanchéité périmétriques à la jonction entre les ouvertures et les extrémités des aubes, les cordons s'étendant radialement vers l'intérieur depuis la surface intérieure de la virole intérieure, les profilés étant disposés à distance des joints d'étanchéité.

Suivant un mode avantageux de l'invention, la largeur de la section du profilé est supérieure à 10% de la largeur de la section de la virole interne, préférentiellement supérieure à 20%, encore plus préférentiellement supérieure à 30%.

Suivant un mode avantageux de l'invention, le redresseur comprend plusieurs profilés dont les extrémités se chevauchent radialement, éventuellement les extrémités sont soudées au niveau des chevauchements. Alternativement, le redresseur peut comprendre plusieurs profilés dont les extrémités sont distantes les unes des autres.

Suivant un encore autre mode avantageux de l'invention, le matériau du profilé est essentiellement exempt de déformations plastiques.

L'invention a également pour objet un compresseur, notamment de turbomachine axiale, comprenant au moins un redresseur aubagé, remarquable en ce que le ou au moins un des redresseurs est conforme à l'invention, le compresseur étant préférentiellement un compresseur basse pression.

### Avantages apportés

L'invention permet de modifier le comportement fréquentiel de la virole interne en modifiant sensiblement sa raideur à la jonction entre deux segments. Le profilé reste souple, il ne forme pas un renfort bloquant totalement les jonctions entre les segments. Ce choix de conserver une certaine souplesse est suffisant pour endiguer les modes vibratoires destructifs de la virole interne.

Le profilé est essentiellement fin. Il reste ainsi léger, ce qui ne modifie pas la masse ou l'inertie de la virole entrant en jeu dans son comportement fréquentiel face à une excitation vibratoire. L'invention permet d'agir sur les modes vibratoires basse fréquence qui sont les plus nocifs. Le choix d'un profilé fin et léger est judicieux puisqu'il est complémentaire de la couche d'abradable dont l'éventuelle viscoélasticité peut être mise à profit pour amortir les vibrations hautes fréquences.

L'invention exploite la présence des aubes pour améliorer l'ancrage des profilés en même temps que leurs propres ancrages. De la sorte, l'ensemble est plus rigide, et permet d'éviter les modes vibratoires à basse fréquence. L'assemblage du redresseur est ainsi facilité par les mesures de l'invention.

### Brève description des dessins

La figure 1 représente une turbomachine axiale selon l'invention.
La figure 2 est une vue en coupe du compresseur de la turbomachine de la figure 1, conforme à l'invention.
La figure 3 illustre deux segments annulaires d'un redresseur du compresseur de la figure 1, le redresseur étant selon l'invention.
La figure 4 représente une coupe transversale de la virole du redresseur de la figure 3.

### Description des modes de réalisation

Dans la description qui va suivre, les termes « intérieur », « interne », « extérieur » et « externe » renvoient à un positionnement par rapport à l' axe de rotation d'une turbomachine axiale.

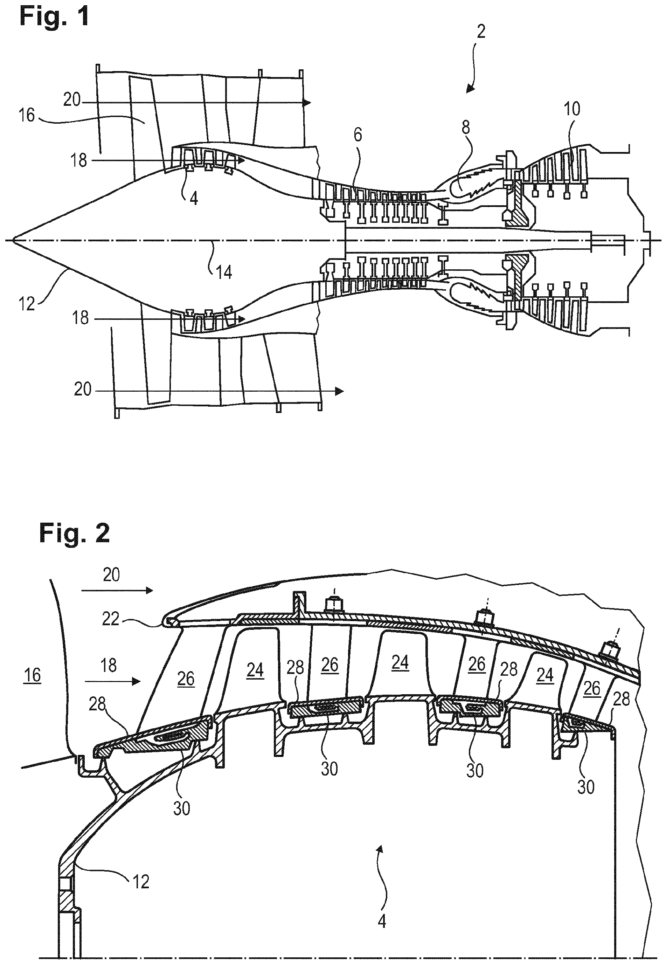

La figure 1 schématise une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent être reliés séparément aux étages de compresseur via des arbres concentriques. Les compresseurs comportent plusieurs rangées d'aubes de rotor associées à des rangées d 'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur basse-pression 4 d'une turbomachine axiale 2 telle que celle de la figure 1. On peut y observer une partie du fan 16 et le bec de séparation 22 du flux primaire 18 et du flux secondaire 20. Le rotor 12 comprend plusieurs rangées d'aubes rotoriques 24, par exemple trois.

Le compresseur basse-pression 4 comprend plusieurs redresseurs, par exemple quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement radialement depuis un carter extérieur, et peuvent y être fixées à l'aide d'un goujon. Elles sont régulièrement espacés les unes des autres, et présentent une même orientation angulaire dans le flux. Avantageusement, ces aubes sont identiques. Eventuellement, l'espacement entre les aubes peut varier localement tout comme leur orientation angulaire. Certaines aubes peuvent être différentes du reste des aubes de la rangée.

Les redresseurs comprennent, chacun, une virole interne 28 permettant de guider le flux primaire 18. Les viroles 28 présentent, chacune, une rangée annulaire d'ouvertures. Ces dernières sont réparties de manière homogène sur le pourtour des viroles internes et sont traversées par les extrémités intérieures des aubes en vue d'y fixer la virole. Les viroles internes 28 présentent une section en forme de la lettre « U », dont la partie creuse est orientée vers l'intérieur. Les viroles internes 28 peuvent être réalisées en métal, par exemple en alliage de titane, ou en matériau composite.

Les redresseurs comportent chacun une couche annulaire de matériau abradable 30 logée dans le creux des viroles internes 28. Les couches d'abradable 30 peuvent être d'épaisseur sensiblement constantes, de manière à former une bande. Ces couches d'abradable 30 sont destinées à coopérer par abrasion avec des léchettes ou ailettes circonférentielles de sorte à assurer une étanchéité. Les couches en matériau abradable assurent un remplissage et peuvent être structurantes.

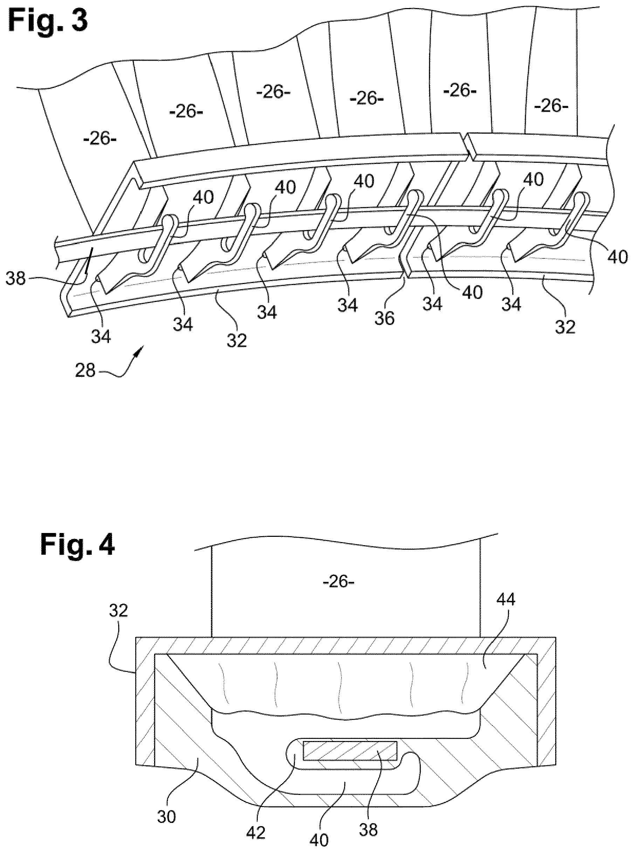

La figure 3 représente une portion de redresseur du compresseur de la figure 2. La virole interne 28 est essentiellement formée d'une pluralité de segments annulaires 32. Elle est découpée en segments annulaires ou secteurs annulaires, préférentiellement réguliers. Les segments annulaires 32 présentent une forme arquée. Ils présentent chacun une pluralité d'ouvertures 34 dans lesquelles sont introduites des extrémités intérieures des aubes statoriques 26. Par exemple, chaque segment annulaire 32 peut être relié à quatre aubes 26. Il peut cependant être relié à moins ou plus de quatre aubes. Les segments annulaires présentent la section en « U » de la virole interne 28, leur creux intérieur logeant la couche annulaire de matériau abradable (non représentée).

Les segments annulaires 32 présentent des interruptions de matière entre eux. Ils peuvent être accolés ou distants. Ils sont néanmoins solidaires les uns des autres par l'intermédiaire de la couche de matériau abradable. La couche matérialise une jonction physique à l'interface 36 entre les segments annulaires voisins. Eventuellement, une extrémité d'aube peut s'étendre au niveau d'une interface entre des segments annulaires 32.

Les segments annulaires 32 sont essentiellement rigides en regard de la couche de matériau abradable, si bien qu'en cas de déformation ou de vibration de la virole interne 26, les déformations sont concentrées dans la tranche de la couche de matériau abradable se trouvant à l'interface 36 entre les segments annulaires 32.

Suivant les conditions de fonctionnement, les vibrations peuvent s'amplifier si bien que le redresseur peut vibrer à des modes critiques pouvant devenir destructifs. Pour maîtriser l'impact de ces modes critiques, le redresseur est doté de profilés 38 traversant les interfaces 36 entre les segments annulaires 32. Ils sont logés dans l'épaisseur de la couche de matériau abradable 30.

Préférentiellement, un même profilé s'étend sur plusieurs segments annulaires. Eventuellement, le redresseur comprend un profilé parcourant toute sa circonférence.

Les profilés 38 comprennent un matériau métallique. Un alliage de titane ou d'aluminium peut être choisi pour réduire la masse. Une nuance d'acier peut être employée pour réduire les coûts. Les profilés 38 peuvent être une baguette, par exemple de section rectangulaire. Une telle baguette peut avoir une épaisseur inférieure à 0,50 mm, et une largeur comprise entre 2,00 mm et 10,00 mm. Les profilés peuvent également avoir une section circulaire, ils peuvent comprendre un fil métallique ou un câble.

Les profilés sont pleins. Ils présentent un allongement rectiligne lorsqu'ils sont produits. Pour être montés dans le redresseur, ils sont déformés afin de suivre la courbure de la virole interne. Leurs matériaux et leurs sections leur permettent d'être suffisamment souples pour se déformer élastiquement lorsqu'ils sont arqués lors du montage.

Les extrémités intérieures des aubes 26 présentent des moyens d'accrochage 40. Les moyens d'accrochage 40 peuvent comprendre des ouvertures et/ou des crochets 40. Ils sont accrochés aux profilés 38 et permettent également une rétention radiale des aubes 26 par rapport à la virole 28, et éventuellement un blocage axial sur un profilé. Les crochets peuvent être des encoches latérales formées sur un bord amont ou aval d'une aube, l'encoche pouvant montrer une largeur essentiellement constante.

La figure 4 représente une coupe transversale de la virole 28 du redresseur de la figure 3. Le crochet 40 définit une cavité 42 allongée axialement qui permet de loger le profilé 38. Le crochet 40 présente une entrée dans la cavité 42 disposée axialement, de sorte à permettre une introduction du profilé transversalement à son allongement, ou axialement à l'axe du redresseur. L'entrée de la cavité 42 peut former un rétrécissement dans cette dernière.

La cavité 42 est généralement ajustée à la section du profilé, elle présente une forme similaire à la section du profilé. La dimension de la cavité est néanmoins supérieure à la section du profilé. Cette particularité permet de pouvoir s'adapter à des variations de positionnement des aubes, et en particulier de leurs crochets 40. La valeur maximale d'écart de positionnement axial d'un crochet 40 peut être supérieure à 3,00 mm par rapport à une position théorique. La valeur maximale d'écart de positionnement radial d'un crochet 40 peut être supérieure à 2,00 mm par rapport à une position théorique.

Un des crochets 40 peut ne pas être en contact des profilés. Un des crochets 40 peut être en contact des profilés essentiellement axialement ou radialement.

Le profilé 38 est positionné dans l'épaisseur de la couche de matériau abradable 30. Il est positionné à coeur de la couche d'abradable, ce qui lui permet d'être enveloppé sur toutes ses faces. Il forme une âme dans la couche de matériau abradable et en modifie son comportement. Ainsi, il permet de modifier l'élasticité de la jonction physique qui est matérialisée par la couche de matériau abradable 30.

La masse des profilés est négligeable par rapport à celle de l'ensemble virole - abradable. Cette masse est inférieure à 5% de la masse de l'ensemble virole - abradable, préférentiellement inférieure à 1%. De la sorte, l'ajout des profilés ne modifie pas significativement la masse de cet ensemble, et n'introduit pas de nouveaux modes critiques. Si la masse avait été augmentée de nouveaux modes critiques de fréquences inférieures à ceux existants peuvent apparaître. Ces nouveaux modes ainsi que leurs harmoniques multiplient les risques de dégradations.

Un joint 44 en silicone est réalisé à la jonction entre les aubes 26 et les ouvertures. Il permet d'y améliorer l'étanchéité et maintien provisoirement le segment annulaire 32 sur les aubes 26 lors de l'assemblage. Il forme un cordon qui est réalisé avant le montage du profilé 38. Avantageusement, l'extrémité intérieure du joint en silicone 44 est à distance du profilé 38. Cette particularité permet d'améliorer l'enveloppement du profilé dans l'abradable.

La configuration générale est particulièrement avantageuse puisqu'elle permet un assemblage simple du redresseur. En effet un tel procédé d'assemblage repose sur les étapes suivantes :
a. assemblage ou fourniture d'un assemblage comprenant une rangée annulaire d'aubes montées sur un support extérieur, une virole interne montée à l'extrémité intérieure des aubes ;
b. présentation d'un profilé au niveau des extrémités intérieure des aubes, le profilé étant positionné du côté axial des entrés des crochets. Ses extrémités étant chacune en contact d'une extrémité intérieure d'aube, et sa partie centrale étant à distance des aubes.
c. appui au centre du profilé 38 de sorte à l'arquer pour qu'il vienne en contact des extrémités intérieures des aubes sur tout son long. Le profilé est alors dans le prolongement des ouvertures des crochets.
d. glissement axial du profilé dans les crochets puis relâchement.
e. mise en oeuvre d'une couche de matériau abradable dans la virole interne.

Il est intéressant de souligner que les étapes b), c), et d) peuvent s'effectuer en quelques secondes pour un profilé étant en contact d'une dizaine d'aubes. Ce temps de montage est réduit et requiert un coût de main d'oeuvre réduit.

## Revendications

1. Redresseur de compresseur (4, 6) de turbomachine (2) axiale comprenant :
- une rangée annulaire d'aubes (26) s'étendant radialement ;
- une virole interne (28) traversée par les extrémités internes des aubes (26), ladite virole étant constituée de segments annulaires (32) disposés bout à bout ;
**caractérisé en ce qu'**il comprend, en outre :
au moins un profilé (38) s'étendant de manière circonférentielle le long de la surface interne de la virole (28) et coopérant avec des moyens d'accrochage (40) des extrémités internes des aubes (26) en vue de leur rétention, le ou lesdits profilés (38) s'étendant de manière continue le long d'au moins deux segments annulaires (32) voisins, et **en ce que**
le ou les profilés (38) sont à distance de la surface interne de la virole (28), ladite surface étant recouverte d'une couche de matériau abradable (30) noyant le ou les profilés (38).

2. Redresseur selon la revendication 1, **caractérisé en ce que** le ou au moins un des profilés (38) présente une section plate, la section étant préférentiellement pleine.

3. Redresseur selon l'une des revendications 1 et 2, **caractérisé en ce que** le profilé (38) ou chacun des profilés (38) s'étend sur au moins un quart, préférentiellement un tiers, plus préférentiellement une moitié, de chacun des deux segments annulaires (32) voisins.

4. Redresseur selon l'une des revendications 1 à 3, **caractérisé en ce que** le ou les profilés (38) forment un anneau ouvert.

5. Redresseur selon l'une des revendications 1 à 4, **caractérisé en ce que** les moyens d'accrochage (40) des extrémités internes des aubes (26) comprennent des ouvertures et/ou des crochets coopérant avec le ou les profilés (38).

6. Redresseur selon l'une des revendications 1 à 5, **caractérisé en ce que** les moyens d'accrochage (40) sont à distance des bords amont et aval de la virole (28), les moyens d'accrochage (40) étant préférentiellement essentiellement en position centrale de la virole (28) suivant une direction axiale.

7. Redresseur selon l'une des revendications 1 à 6, **caractérisé en ce que** les portions des moyens d'accrochage (40) coopérant avec le ou les profilés (38) présentent des longueurs suivant une direction axiale qui sont supérieures de 100%, préférentiellement 200%, à la largeur du ou des profilés (38) de sorte à autoriser une variation de positionnement des moyens d'accrochage (40) suivant ladite direction.

8. Redresseur selon l'une des revendications 1 à 7, **caractérisé en ce que** le ou les profilés (38) présentent un profil annulaire correspondant au profil de la virole (28).

9. Redresseur selon la revendication 8, **caractérisé en ce que** le profil du ou des profilés (38) entre deux aubes (26) voisines correspond à celui de la virole (28).

10. Redresseur selon l'une des revendications 1 à 9, **caractérisé en ce que** la virole (28) comprend au moins quatre segments annulaires (32), le profilé ou un des profilés (38) décrivant au moins un quart de la virole interne (28), préférentiellement au moins une moitié de la virole interne (28), plus préférentiellement toute la virole interne (28).

11. Redresseur selon l'une des revendications 1 à 10, **caractérisé en ce que** le profilé (38) est en matériau métallique, préférentiellement du titane, de l'acier ou de l'aluminium.

12. Redresseur selon l'une des revendications 1 à 11, **caractérisé en ce que** les moyens d'accrochage (40) des extrémités internes des aubes (26) comprennent des crochets (40) présentant une entrée orientée selon une direction axiale.

13. Redresseur selon la revendication 12, **caractérisé en ce que** les crochets (40) présentent un rebord au niveau de leur entrée, apte à assurer une retenue du ou des profilés (38) selon la direction axiale.

14. Compresseur, notamment de turbomachine axiale, comprenant au moins un redresseur aubagé, **caractérisé en ce que** le ou au moins un des redresseurs est conforme à l'une des revendications 1 à 13, le compresseur étant préférentiellement un compresseur (4) basse pression.

## Patentansprüche

1. Kompressorgleichrichter (4, 6) einer axialen Turbomaschine (2), bestehend aus:
- einer ringförmigen Reihe von Leitschaufeln (26), die sich axial erstrecken,
- einem inneren Mantel (28), der von den inneren Enden der Leitschaufeln (26) durchquert wird, wobei der genannte Mantel aus ringförmigen Segmenten (32) besteht, die aneinanderliegend angeordnet sind.
**dadurch gekennzeichnet, dass** er außerdem Folgendes enthält:
mindestens ein Profil (38), das sich umfänglich entlang der inneren Fläche des Mantels (28) erstreckt und mit Befestigungsmitteln (40) der inneren Enden der Leitschaufeln (26) für deren Rückhaltung zusammenwirkt, wobei sich das oder die genannten Profile (38) kontinuierlich entlang von mindestens zwei benachbarten ringförmigen Segmenten (32) erstrecken und
das oder die Profile (38) von der inneren Oberfläche des Mantels (28) entfernt sind, wobei die genannte Oberfläche mit einer Schicht Verschleißmaterial (30) bedeckt ist, welches das oder die Profile (38) umhüllt.

2. Gleichrichter nach Anspruch 1, **dadurch gekennzeichnet, dass** das oder mindestens eines der Profile (38) einen flachen Abschnitt aufweist, wobei dieser Abschnitt vorzugsweise massiv ist.

3. Gleichrichter nach einem der Ansprüche 1 bis 2, **dadurch gekennzeichnet, dass** sich das Profil (38) oder jedes der Profile (38) über mindestens ein Viertel, vorzugsweise über ein Drittel, noch bevorzugter über eine Hälfte jedes der beiden benachbarten ringförmigen Segmente (32) erstreckt.

4. Gleichrichter nach einem der Ansprüche 1 bis 3, **dadurch gekennzeichnet, dass** das Profil oder die Profile (38) einen offenen Ring bilden.

5. Gleichrichter nach einem der Ansprüche 1 bis 4, **dadurch gekennzeichnet, dass** die Haltemittel (40) der inneren Enden der Leitschaufeln (26) Öffnungen und/oder Haken aufweisen, die mit dem oder den Profilen (38) zusammenwirken.

6. Gleichrichter nach einem der Ansprüche 1 bis 5, **dadurch gekennzeichnet, dass** die Haltemittel (40) vom oberen und unteren Rand des Mantels (28) entfernt sind, wobei sich die Haltemittel (40) vorzugsweise in einer im Wesentlichen zentralen Position des Mantels (28) in axialer Richtung befinden.

7. Gleichrichter nach einem der Ansprüche 1 bis 6, **dadurch gekennzeichnet, dass** die Teile der Haltemittel (40), die mit dem oder den Profilen (38) zusammenwirken, Längen in axialer Richtung aufweisen, die mehr als 100%, vorzugsweise mehr als 200% der Breite des oder der Profile (38) betragen, um eine Veränderung der Position der Haltemittel (40) in der genannten Richtung zu ermöglichen.

8. Gleichrichter nach einem der Ansprüche 1 bis 7, **dadurch gekennzeichnet, dass** das oder die Profile (38) ein ringförmiges Profil aufweisen, das dem Profil des Mantels (28) entspricht.

9. Gleichrichter nach Anspruch 8, **dadurch gekennzeichnet, dass** das Profil des oder der Profile (38) zwischen zwei benachbarten Leitschaufeln (26) demjenigen des Mantels (28) entspricht.

10. Gleichrichter nach einem der Ansprüche 1 bis 9, **dadurch gekennzeichnet, dass** der Mantel (28) mindestens vier ringförmige Segmente (32) beinhaltet, wobei das Profil oder eines der Profile (38) mindestens ein Viertel des inneren Mantels (28), vorzugsweise mindestens eine Hälfte des inneren Mantels (28) und noch bevorzugter den gesamten inneren Mantel (28) beschreibt.

11. Gleichrichter nach einem der Ansprüche 1 bis 10, **dadurch gekennzeichnet, dass** das Profil (38) aus einem metallischen Material, vorzugsweise aus Titan, Stahl oder Aluminium besteht.

12. Gleichrichter nach einem der Ansprüche 1 bis 11, **dadurch gekennzeichnet, dass** die Haltemittel (40) der inneren Enden der Leitschaufeln (26) Haken (40) aufweisen, deren Eingang in axialer Richtung ausgerichtet ist.

13. Gleichrichter nach Anspruch 12, **dadurch gekennzeichnet, dass** die Haken (40) einen Rand im Bereich ihres Eingangs aufweisen, der in der Lage ist, die Rückhaltung des oder der Profile (38) in axialer Richtung sicherzustellen.

14. Kompressor, insbesondere einer axialen Turbomaschine, der mindestens einen Gleichrichter mit Leitschaufeln aufweist, **dadurch gekennzeichnet, dass** der oder mindestens einer der Gleichrichter einem der Ansprüche 1 bis 13 entspricht, wobei der Kompressor vorzugsweise ein Niederdruckkompressor (4) ist.

## Claims

1. Stator of a compressor (4, 6), of an axial turbomachine (2) comprising:
- an annular ring of blades (26) extending radially;
- an inner shell (28) through which the inner tips of the blades (26) pass, the said shell comprising annular segments (32) arranged end to end;
**characterized in that** it further comprises:
at least one bar (38) extending circumferentially along the length of the inner surface of the shell (28) and mating with a means of engaging (40) the inner tips of the blades (26) for their retention, the said bar(s) (38) extending continuously along at least two adjacent annular segments (32), **in that** the bar(s) (38) is/are spaced from the inner surface of the shell (28), the said surface being covered with a layer of abradable material (30) embedding the bar(s).

2. Stator in accordance with Claim 1, **characterized in that** the or at least one of the bar (38) has a flat section, the section preferably being solid.

3. Stator in accordance with one of Claims 1 and 2, **characterized in that** the bar (38) or each of the bars (38) extends over at least a quarter, preferably one third, more preferably one half, of each of two adjacent annular segments (32).

4. Stator in accordance with one of Claims 1 to 3, **characterized in that** the bar(s) (38) form(s) an open ring.

5. Stator in accordance with one of Claims 1 to 4, **characterized in that** the means of engagement (40) of the inner tips of the blades (26) comprise openings and/or hooks mating with the bar(s) (38).

6. Stator in accordance with one of Claims 1 to 5, **characterized in that** the means of engagement (40) are spaced upstream and downstream of the shell (28), the means of engagement (40) preferably being essentially central in the shell (28) in an axial direction.

7. Stator in accordance with one of Claims 1 to 6, **characterized in that** the portions of the means of engagement (40) mating with the bar(s) (38) have lengths in an axial direction which are higher than 100%, preferably 200 %, of the width of the bar(s) (38) so as to allow a variation of positioning of the means of engagement (40) along the said direction.

8. Stator in accordance with one of Claims 1 to 7, **characterized in that** the bar(s) (38) have an annular profile matching that of the profile of the shell (28).

9. Stator in accordance with Claim 8, **characterized in that** the profile of the bar(s) (38) between two adjacent blades (26) matches that of the shell (28).

10. Stator in accordance with one of Claims 1 to 9, **characterized in that** the shell (28) comprises at least four annular segments (32), the bar or one of the bar(s) (38) spanning at least a quarter of the inner shell (28), preferably at least one half of the inner shell (28), more preferably the entire inner shell (28).

11. Stator in accordance with one of Claims 1 to 10, **characterized in that** the bar(s) (38) is/are made of a metallic material, preferably titanium, steel or aluminium.

12. Stator in accordance with one of Claims 1 to 11, **characterized in that** the means of engagement of the inner tips of the blades (26) comprise hooks (40) whose throats are oriented in an axial direction.

13. Stator in accordance with Claim 12, **characterized in that** the hooks (40) have lips at their throats, designed to restrain the bar(s) (38) axially.

14. Compressor, especially of an axial turbomachine, comprising at least one bladed stator, **characterized in that** the, or at least one of the stators is in accordance with one of Claims 1 to 13, the compressor being preferably a low-pressure compressor (4).
